# EUROPEAN PATENT APPLICATION

(11) **EP 4 838 661 A1**
(43) Date of publication of application: **11.11.2026**
(21) Application number: 25841410.1
(22) Date of filing: 15.07.2025
(51) Int. Cl.: H01M 50/258, H01M 50/256, H01M 50/227, H01M 50/251

(54) **BATTERY PACK AND ENERGY STORAGE SYSTEM**

(30) Priority: 19.07.2024 KR 20240095855
(71) Applicant: LG Energy Solution, Ltd., Seoul 07335 (KR)
(72) Inventor: OH, Sunghoon, Daejeon 34122 (KR); AHN, Jong Kyu, Daejeon 34122 (KR); LEE, Dong Geun, Daejeon 34122 (KR); CHO, Hyun, Daejeon 34122 (KR); JEONG, Gyeongsu, Daejeon 34122 (KR); YUN, Youngwon, Daejeon 34122 (KR)
(74) Representative: Plasseraud IP
(86) International application number: PCT/KR2025/010333
(87) International publication number: WO 2026/019209

(57) **Abstract**

A battery pack according to the present invention includes: a cell module assembly including a battery cell stack in which a plurality of battery cells is stacked; a pack case accommodating the cell module assembly; and a latch capable of being removably mounted in the pack case, and capable of coupling adjacent battery packs.

## Description

### CROSS REFERENCES TO RELATED APPLICATION(S)

This application is based on and claims priority from Korean Patent Application No. 10-2024-0095855, filed on July 19, 2024, with the Korean Intellectual Property Office, the disclosure of which is incorporated herein in its entirety by reference.

### TECHNICAL FIELD

The present invention relates to a battery pack and an energy storage system, and more particularly, to a battery pack and an energy storage system for easily coupling and separating stackable pack cases.

### BACKGROUND

The use of portable devices such as cell phones, laptops, camcorders, and digital cameras, and energy storage systems (ESS) has been routinized in modern society, which accelerates the development of technologies in the relevant fields. Further, as a measure to solve the atmospheric pollution caused from existing gasoline vehicles that uses fossil fuels, rechargeable secondary batteries are being used as power sources for electric vehicles (EV), hybrid electric vehicles (HEV), plug-in hybrid electric vehicles (P-HEV) and so on. Thus, the necessity to develop the secondary batteries is increasing.

Presently, commercially available secondary batteries include nickelcadmium batteries, nickel-hydrogen batteries, nickel-zinc batteries, lithium secondary batteries, and so on. Of the secondary batteries, the lithium secondary batteries are emerging as the most popular, as they are freely rechargeable, have low self-discharge rates, and have a high energy density.

These secondary batteries are widely used not only in small devices such as portable electronic devices, but also in medium and large devices such as electric vehicles and power storage systems, and their utilization is growing rapidly. Further, in recent years, the use of home battery packs for the power storage purpose is being on the rise.

Meanwhile, there is a need for a solution for coupling and separating the stacked battery packs in a simpler manner.

### DETAILED DESCRIPTION OF THE INVENTION

### Technical Problem

The object of the present invention is to provide a battery pack and an energy storage system, in which stacked battery packs may be more easily coupled and separated.

The technical problems to be solved by the embodiments of the present invention are not limited to those described above, and may be expanded in various ways within the scope of the technical idea included in the present invention.

### Technical Solution

According to an embodiment of the present invention, a battery pack may include: a cell module assembly including a battery cell stack in which a plurality of battery cells is stacked; a pack case accommodating the cell module assembly; and a latch that is removably mounted in the pack case and is capable of coupling adjacent battery packs.

An upper portion of the latch may include a pair of protrusions protruding towards both sides thereof, and a lower portion of the latch may include a center support extending downward in a vertical direction from between the pair of protrusions, and a pair of wings extending to both sides from a lower end of the center support.

The latch may further include a removal grip portion formed on a front area thereof to protrude from the front area, and the latch may be removable outwardly from an outer surface toward an outside of the pack case in a horizontal direction.

The pack case may include a first latch engagement portion with which the upper portion of the latch can be engaged, the first latch engagement portion may include a pair of support portions supporting the pair of protrusions of the upper portion of the latch, and a through groove provided between the pair of support portions, through which the center support of the latch penetrates, wherein the pair of support portions may support at least bottom surfaces of the pair of protrusions of the latch to restrict a positional movement of the latch in the vertical direction.

The pair of support portions of the first latch engagement portion may have a shape of plates disposed under the bottom surfaces of the pair of protrusions.

The through groove of the first latch engagement portion may have a notch shape.

The first latch engagement portion may further include: a pair of receiving recesses provided at both ends of the pair of support portions, and ends of the pair of protrusions of the upper portion of the latch may be fitted into and received in the pair of receiving recesses, respectively.

The upper portion of the latch may further include a hook provided on a rear area thereof and protruding from the rear area, the first latch engagement portion may further include a hook groove provided between the pair of support portions and around the through groove, and the hook of the upper portion of the latch may be hooked and engaged into the hook groove of the first latch engagement portion.

The pack case may include a second latch engagement portion with which a lower portion of the latch can be engaged, the second latch engagement portion may include: an opening formed by opening on an upper surface thereof, through which the lower portion of the latch passes; a mounting portion communicating with the opening; and a pair of catching portions disposed on both sides of the opening, and having a shape protruding toward the opening.

Lower ends of the pair of wings of the lower portion of the latch may be fixed to the center support, remaining portions of the pair of wings may be displaceable within a distance in which the remaining portions of the pair of wings are spaced from the center support, when the lower portion of the latch penetrates downwardly through the opening of the second latch engagement portion, a force is applied to the pair of wings of the latch by the pair of catching portions, and the remaining portions of the pair of wings may move toward the central support, and when the pair of wings of the latch pass through the opening and are mounted in the mounting portion, the pair of wings may be restored to their original states by resilience, and caught in the pair of catching portions of the second latch engagement portion.

Each of the pair of wings of the lower portion of the latch may have a slope surface tapering downward relative to an extending direction of the center support, and the pair of wings may slide into the opening between the pair of catching portions of the second latch engagement portion along the slope surface, to be inserted into the mounting portion.

The mounting portion of the second latch engagement portion may have a shape tapering downward to conform to an external contour of the pair of wings of the lower portion of the latch.

Before or after the latch is mounted in the second latch engagement portion, an entire width of the lower portion of the latch including the pair of wings may be larger than a width of the opening of the second latch engagement portion.

The pack case may include a first latch engagement portion with which an upper portion of the latch can be engaged, and a second latch engagement portion with which a lower portion of the latch is engaged, the first latch engagement portion may be disposed in a lower portion of the pack case, and the second latch engagement portion may be disposed in an upper portion of the pack case, the first latch engagement portion and the second latch engagement portion being positioned in the same line in a vertical direction of the pack case, and the upper portion of the latch may be engaged with the first latch engagement portion of an upper stacked battery pack, and the lower portion of the latch may be engaged with the second latch engagement portion of a lower stacked battery pack, enabling the fixed coupling between vertically stacked battery packs.

The pack case may include an upper protrusion portion in an upper portion thereof, and a lower receiving portion in a lower portion thereof, the upper protrusion portion of the lower stacked battery pack may be fitted and coupled into the lower receiving portion of the upper stacked battery pack, the first latch engagement portion may be provided in the lower receiving portion, and the second latch engagement portion may be provided in the upper protrusion portion.

The upper protrusion portion of the pack case may be a handle for carrying the battery pack.

The pack case may include a plastic with high heat resistance and rigidity.

It is possible to provide an energy storage system including battery packs according to the embodiments described above.

### Advantageous Effects

In the battery pack and the energy storage system according to the present invention, stacked battery packs may be coupled and separated in a simpler manner.

Further, latches for coupling the stackable battery packs may be coupled to and removed from a pack case of a battery pack in a simpler manner.

The effects of the present invention are not limited to those described above, and other effects that are not described above may clearly be understood to those skilled in the art from the descriptions in the claims.

### BRIEF DESCRIPTION OF THE DRAWINGS

FIG. 1 is a perspective view of a modular battery pack according to an embodiment of the present invention.
FIGS. 2 and 3 are each a view illustrating the state of using the battery pack of FIG. 1.
FIG. 4 is an exploded perspective view of the battery pack of FIG. 1.
FIG. 5 is a perspective view of a cell module assembly of FIG. 4.
FIG. 6 is an exploded perspective view of the cell module assembly of FIG. 4.
FIG. 7 is a view illustrating a state where an external cover is separated from a pack case of the battery pack of FIG. 1.
FIG. 8 is a view illustrating a latch separated from the battery pack of FIG. 7.
FIG. 9 is an enlarged view of a handle of FIG. 7.
FIG. 10 is an enlarged view of a handle receiving portion of FIG. 7.
FIGS. 11 and 12 are views illustrating the states before and after the handle and the handle receiving portion of FIG. 7 are engaged with each other in stacked battery packs, respectively.
FIG. 13 is an enlarged view of the latch of FIG. 8.
FIG. 14 is an enlarged view of the latch and a latch engagement portion of the handle receiving portion in the dashed portion of FIG. 8.
FIG. 15 is an enlarged view of a latch engagement portion of the handle.
FIG. 16 is a side view taken when the perspective view of FIG. 11 is viewed from a different angle.
FIG. 17 is a reference view illustrating the state where vertically stacked battery packs are coupled to each other.
FIG. 18 is a reference view illustrating a process of engaging the latch with stacked modular battery packs, according to each embodiment described above.
FIG. 19 is a reference view illustrating a process of removing the latch from stacked modular battery packs according to each embodiment described above.
FIG. 20 is a reference view schematically illustrating a case where a plurality of modular battery packs according to the embodiments of the present invention above are stacked, and a BPU is coupled to the top of the stacked modular battery packs.

### DETAILED DESCRIPTION OF THE EMBODIMENTS

Hereinafter, embodiments of the present invention will be described in detail with reference to the accompanying drawings to facilitate the practicing of the invention by one of ordinary skill in the art to which the present invention belongs. The present invention may be implemented in various different forms, and is not limited to the embodiments described herein.

In order to clearly describe the present invention, portions that are not related to the descriptions of the present invention will be omitted, and identical or similar components throughout the descriptions herein will be denoted by the same reference numerals.

In the drawings, the size and thickness of each component are arbitrarily illustrated for the convenience of descriptions, and the present invention is not necessarily limited to those illustrated in the drawings. In the drawings, the thickness is enlarged to clearly depict multiple layers and regions. Further, in the drawings, the thicknesses of some layers and regions are exaggerated for the convenience of description.

In the descriptions herein below, when an element such as a layer, film, region, or plate is present "above" or "on" a specific part, this description includes not only a case where the element is disposed "directly on" the specific part, but also a case where another part is present between the element and the specific part. Meanwhile, when an element is present "directly on" a specific part, this description indicates that another part is not present between the element and the specific part. Further, when an element is present "above" or "on" a reference portion, this description indicates that the element is disposed on or under the reference portion, and does not necessarily indicate that the element is disposed "above" or "on" the reference portion against the direction of gravity.

Throughout the descriptions herein, when a certain part "includes" a specific component, this description does not indicate that the certain part excludes other components, but indicates that the certain part may further include other components, unless otherwise defined.

Throughout the descriptions herein, a "plan view" indicates a view taken when an object is viewed from above, and a "cross-sectional view" indicates a view taken when a vertical cross section of an object is viewed from side.

Hereinafter, embodiments of the present invention will be described with reference to the drawings.

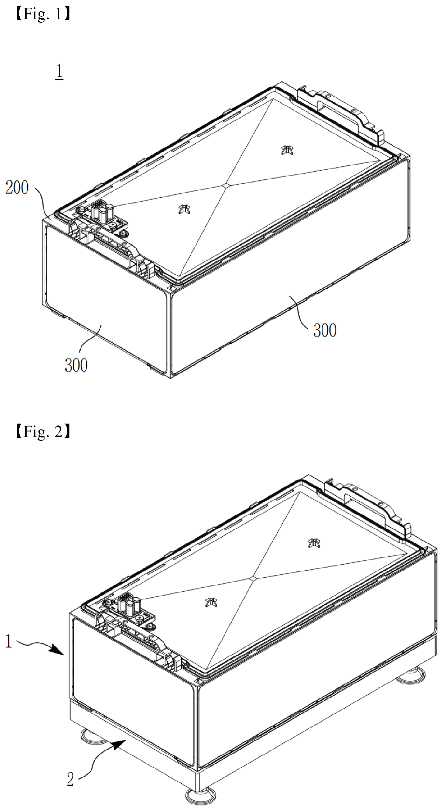

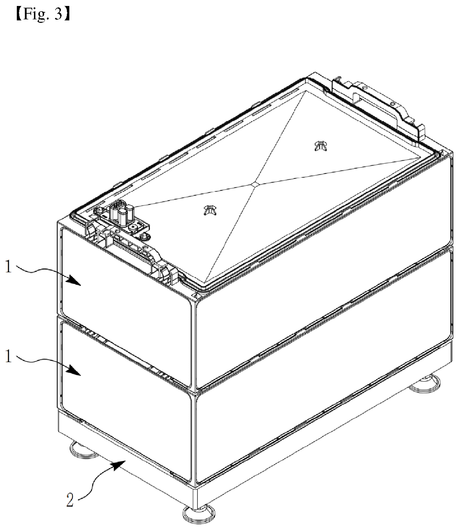

FIG. 1 is a perspective view of a modular battery pack 1 according to an embodiment of the present invention. FIGS. 2 and 3 are each a view illustrating the state of using the battery pack 1 of FIG. 1.

The battery pack 1 may be used alone as illustrated in FIG. 1.

FIGS. 2 and 3 illustrate a case where the battery pack 1 is implemented as an energy storage system (ESS). Referring to FIG. 2, a base part 2 may be provided to protect the battery pack 1 from the ground or the like, and the battery pack 1 may be stacked on the base part 2. Referring to FIG. 3, a plurality of battery packs 1 may be provided and stacked. The plurality of battery packs 1 may be stacked, for example, in the vertical direction. Naturally, the plurality of battery packs 1 may be combined freely in series or parallel.

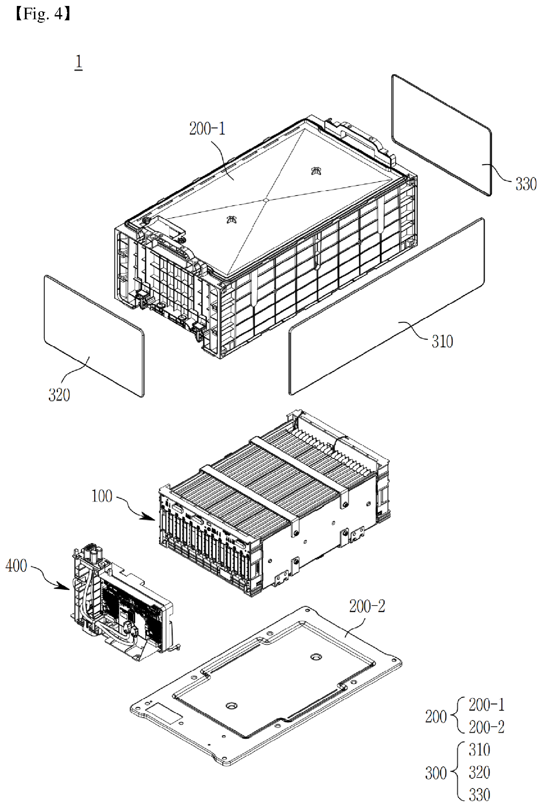

FIG. 4 is an exploded perspective view of the battery pack 1 of FIG. 1.

Referring to FIG. 4, the battery pack 1 includes a cell module assembly (CMA) 100, and a pack case 200 that accommodates the cell module assembly 100 therein.

Further, the battery pack 1 may include an external cover 300 covering at least part of the outer surface of the pack case 200.

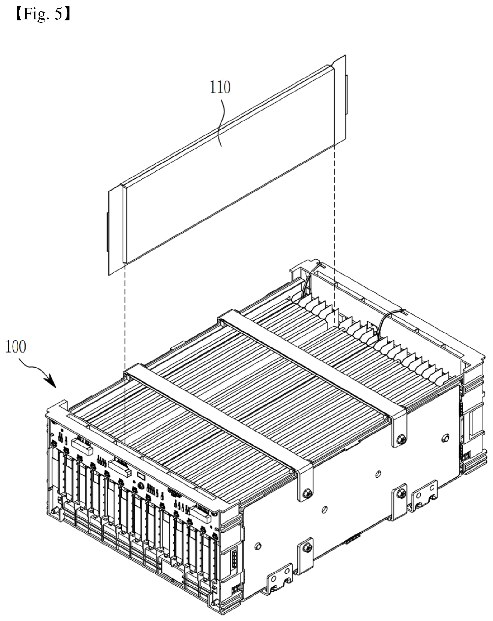

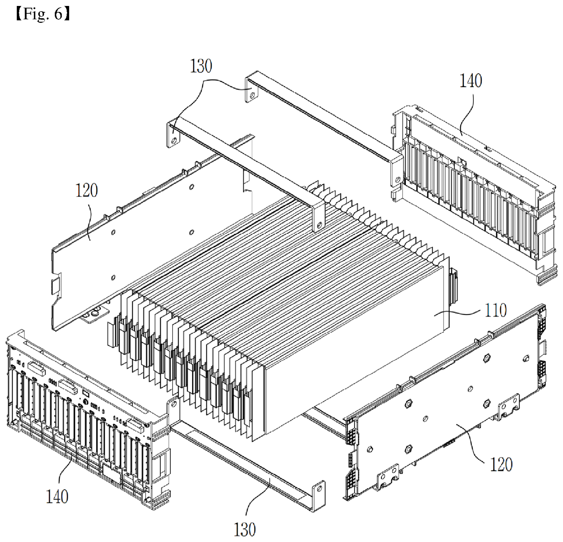

First, the cell module assembly 100 is accommodated in the internal space of the pack case 200. When an electronics unit 400 is provided, the electronics unit 400 may also be accommodated together with the cell module assembly 100 in the pack case 200. Other details of the cell module assembly 100 will be described later with reference to FIGS. 5 and 6.

The pack case 200 may be configured to have a void space formed therein to accommodate, for example, the cell module assembly 100 in the space. For example, the pack case 200 may be configured in a box shape as illustrated in FIGS. 1 and 4.

The pack case 200 may include, for example, an upper case 200-1 covering the front and rear surfaces, the left and right surfaces, and the upper surface of the cell module assembly 100, and a lower case 200-2 covering the lower surface of the cell module assembly 100. However, the structure and shape of the pack case 200 are not limited to those illustrated in FIG. 4, and the pack case 200 may have any other structures and shapes as long as it may accommodate the cell module assembly 100 therein. The structure and shape of the pack case may be modified or changed in various ways according to, for example, the specifications of the present invention and the environment in which the present invention is implemented.

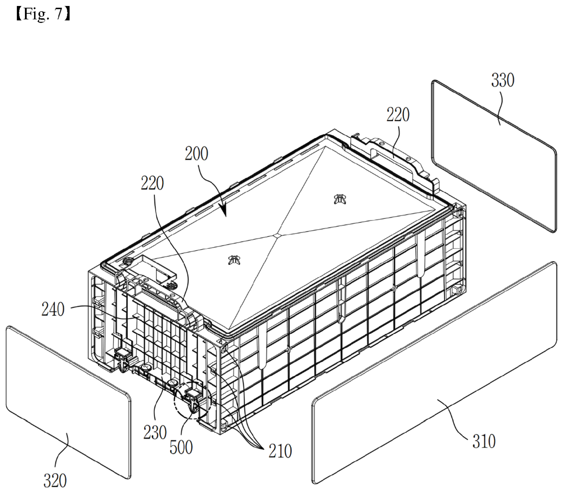

The specific components of the pack case 200 will be described in more detail with reference to FIG. 7 and its subsequent drawings.

Meanwhile, the pack case 200 may be made of a plastic having high heat resistance and rigidity. In this case, the pack case 200 may be more easily manufactured, reducing the manufacturing costs, as compared to a case where the pack case 200 is made of a metal. In addition, the structure and shape of the outer surface of the pack case 200 and the structure and shape of the interior of the pack case 200 may be manufactured in various forms according to specifications or design requirements of the battery pack 1.

When the pack case 200, including the specific components to be described later with respect to FIG. 7 and subsequent drawings, is manufactured from the plastic having the high heat resistance and rigidity, the pack case 200 may be more easily manufactured. Further, it is easier to manufacture the internal accommodating space of the pack case 200, that is, an accommodating space of the pack case that accommodates the cell module assembly 100 and/or the electronics unit 400.

The manufacturing costs may also be reduced when the pack case 200 is made of the plastic having the high heat resistance and rigidity, as compared to the case where the entire pack case 200 is made of a metal.

Referring to FIG. 4, the external cover 300 covers at least part of the outer surface of the pack case 200. FIGS. 1 to 4 illustrate an embodiment in which the external cover 300 covers the front surface and both the side surfaces of the pack case 200. For example, the external cover 300 may include a first external cover 310, a second external cover 320, and a third external cover 330 that cover at least part of the outer surface of the pack case 200. However, the present invention is not limited thereto, and the external cover 300 may be implemented in various modified or changed forms by, for example, covering all the surfaces of the pack case 200 or covering only any surface(s) of the front, rear, left, and right surfaces of the pack case 200.

According to an embodiment of the present invention, the pack case 200 is made of the plastic having the high heat resistance and rigidity, and at least part of the outer surface of the pack case 200 is covered by the external cover 300 as described below, so that while functionally protecting and reinforcing the battery pack 1, an aesthetic function may be added to the external appearance of the battery pack 1.

The external cover 300 covers at least part of the outer surface of the pack case 200. FIG. 4 illustrates an embodiment in which the external cover 300 covers the front surface and the left/right surfaces of the pack case 200. According to, for example, the specifications of the present invention and the environment in which the present invention is implemented, various modifications or changes may be applied to determine which surface among the six surfaces of the front/rear surfaces, the left/right surfaces, and the upper/lower surfaces of the pack case 200 is to be covered by the external cover 300.

The external cover 300 may be made of a metal material so as to maintain the rigidity even during a thermal event. Further, as described herein later, the external cover 300 may be made of a ferromagnetic material to be magnetically coupled to a magnet (not illustrated) provided in the pack case 200. The external cover 300 may be made of, for example, iron, nickel, cobalt, a stainless steel, or an alloy or mixture thereof.

Depending on the circumstances, the battery pack 1 may additionally include the electronics unit 400. The electronics unit 400 may collect and transmit data sensed from the cell module assembly 100, and controls the cell module assembly 100. The description of the electronics unit 400 will be omitted as it can be understood by referring to, for example, the typical BMS.

FIG. 5 is a perspective view of the cell module assembly 100 of FIG. 4. FIG. 6 is an exploded perspective view of the cell module assembly 100 of FIG. 4.

The cell module assembly 100 may include one or more battery cells 110. Here, each battery cell 110 is a secondary battery, and may include an electrode assembly, an electrolyte, and a battery case. The battery cells 110 provided in the cell module assembly 100 may be, for example, pouch-type secondary batteries. Depending on the circumstances, other types of secondary batteries, such as cylindrical batteries or prismatic batteries, may be applied to the cell module assembly 100 of the present invention.

The plurality of battery cells 110 are stacked on one another to form a battery cell stack. In the battery cell stack, the plurality of battery cells 110 may be stacked in the form arranged in the horizontal direction (X axis direction of the figures) while each standing upright in the vertical direction (Z axis direction of the figures). Each battery cell 110 may include electrode leads, which may be disposed at both ends or one end of each battery cell 110. A secondary cell with its electrode leads protruding in opposite directions may be referred to as a bidirectional cell, and a secondary cell with its electrode leads protruding in one direction may be referred to as a unidirectional cell. FIG. 5 illustrates bidirectional cells. However, the present invention is not limited by the specific type or shape of the secondary batteries described above, and secondary batteries with various shapes well-known at the filing time of the present invention may be applied to the cell module assembly 100 of the present invention.

Referring to the embodiments of FIGS. 5 and 6, the cell module assembly 100 may be configured as follows. End plates 120 are disposed on both sides of the battery cell stack formed by stacking the plurality of battery cells 110. The battery cell stack and the end plates 120 are coupled to each other using straps 130. Further, busbar housing assembly 140 are coupled to the front and rear surfaces of the battery cell stack, respectively. However, the present invention is not limited thereto, and the cell module assembly 100 may be configured in various ways according to the specifications of the battery pack 1 of the present invention and the environment in which the present invention is implemented.

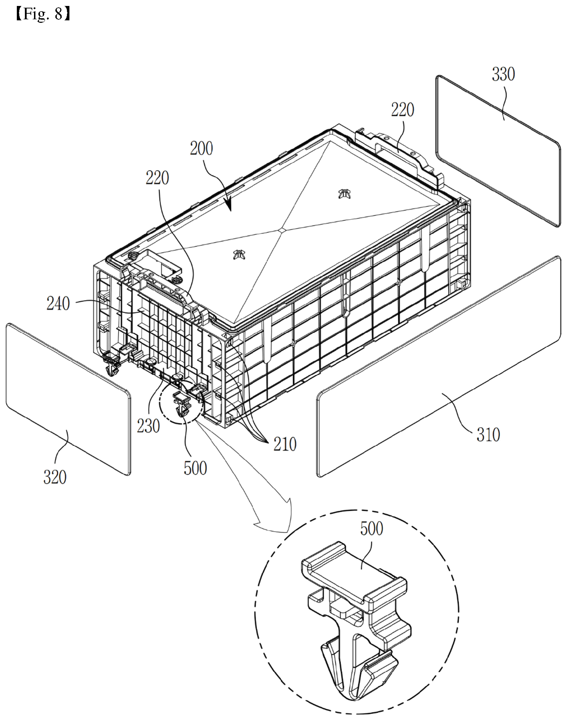

FIG. 7 illustrates a state where the external cover 300 is separated from the pack case 200 of the battery pack 1 of FIG. 1. FIG. 8 illustrates a state where a latch 500 is separated from the battery pack 1 of FIG. 7.

Referring to FIG. 7, the specific components of the pack case 200 will be described.

First, the pack case 200 includes an external cover coupling portion 210 for coupling the external cover 300. For example, a magnet is housed in the external cover coupling portion 210 of the pack case 200. By the magnetic force between the magnet and the external cover 300 made of the ferromagnetic material, the external cover 300 is attached onto and coupled to the outer surface of the pack case 200. However, the method of coupling the pack case 200 and the external cover 300 is not limited thereto, and any other coupling methods may be applied to the present invention as long as they may couple the pack case 200 and the external cover 300.

The pack case 200 includes an upper protrusion portion 220 at the top thereof. The upper protrusion portion 220 may be, for example, a handle for lifting and carrying the pack case 200. Further, the pack case 200 includes a lower receiving portion 230 at the bottom thereof. A pair of upper protrusions 220 may be provided on two opposing surfaces of the pack case 200, respectively. Similarly, a pair of lower receiving portions 230 may be provided on the two surfaces of the pack case 200 where the upper protrusion portions 220 are provided, respectively. When the battery packs 1 are stacked vertically, the upper protrusion portion 220 of the lower stacked battery pack 1 is fitted into and coupled to the lower receiving portion 230 of the upper stacked battery pack 1.

Referring to FIGS. 7 and 8, the latch 500 is provided in the lower receiving portion 230. The latch 500 will be described in more detail later.

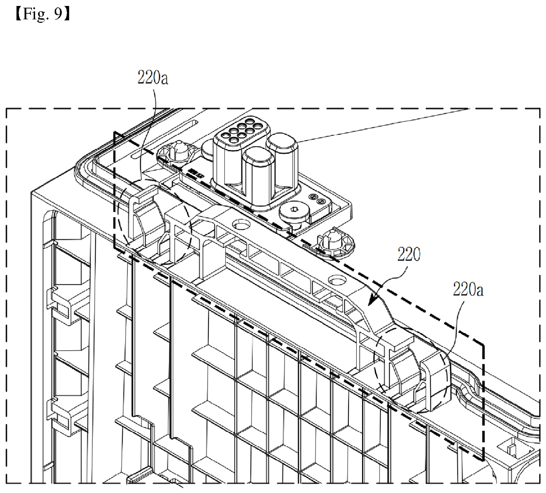

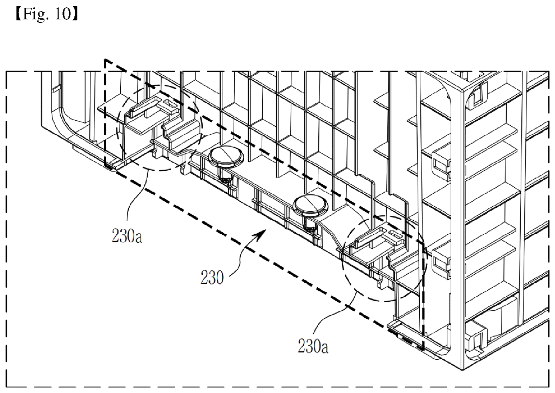

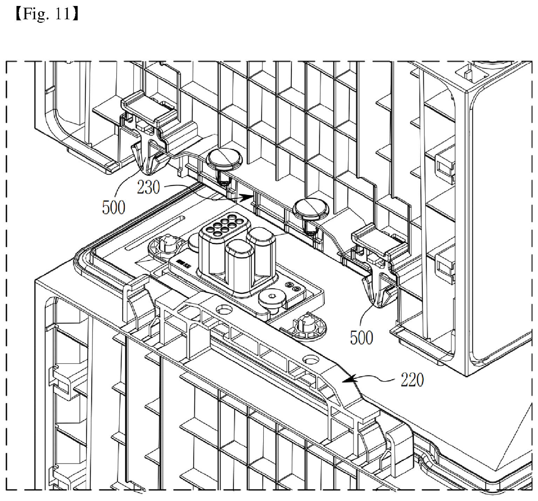

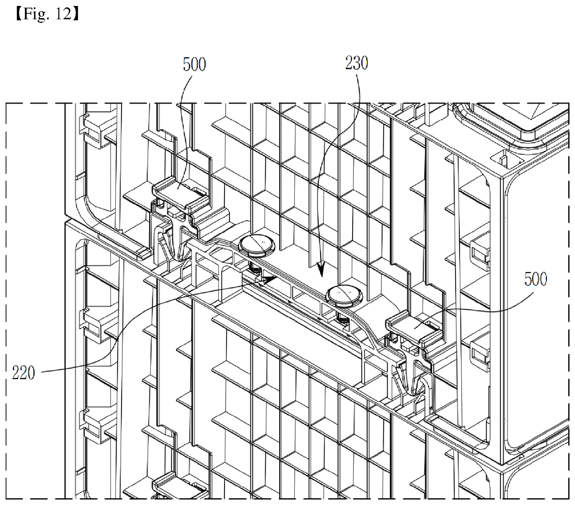

FIG. 9 is an enlarged view of the upper protrusion portion 220 of FIG. 7. FIG. 10 is an enlarged view of the lower receiving portion 230 of FIG. 7. FIGS. 11 and 12 illustrate the states before and after the upper protrusion portion 220 and the lower receiving portion 230 of FIG. 7 are engaged with each other when the battery packs 1 are stacked, respectively.

Referring to FIGS. 7 and 9, the upper protrusion portion 220 protrudes upward from the upper end of the pack case 200. The structure and shape of the upper protrusion portion 220 are not limited to those illustrated in the present invention, and any other structures and shapes may be applied as long as the upper protrusion portion 220 may protrude upward from the upper end of the pack case 200 to lift the pack case 200, and the latch 500 to be described herein later may be coupled thereto.

Referring to FIGS. 7 and 10, the lower receiving portion 230 is provided at the bottom of the pack case 200. Referring to FIG. 11, the lower receiving portion 230 has a recessed shape that conforms to the protruding shape of the upper protrusion portion 220. Further, the upper protrusion portion 220 and the lower receiving portion 230 have substantially the same width and height.

Accordingly, as illustrated in FIG. 12, the upper protrusion portion 220 provided in the pack case 200 of the lower stacked battery pack 1 is received in the lower receiving portion 230 provided in the pack case 200 of the upper stacked battery pack 1. The upper protrusion portion 220 of the lower stacked battery pack 1 and the lower receiving portion 230 of the upper stacked battery pack 1 are engaged with each other.

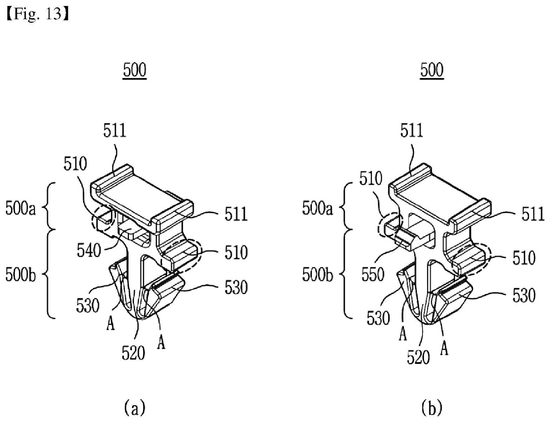

Referring back to FIGS. 7, 8, and 11, the latch 500 is provided in the lower receiving portion 230. As illustrated in FIG. 12, when the upper protrusion portion 220 of the lower stacked battery pack 1 and the lower receiving portion 230 of the upper stacked battery pack 1 are engaged with each other, a part of the latch 500 (the upper portion 500a; see FIG. 13) is coupled to the lower receiving portion 230 of the upper stacked battery pack 1, and the remaining part of the latch 500 (the lower portion 500b; see FIG. 13) is coupled to the upper protrusion portion 220 of the lower stacked battery pack 1. in other words, the upper protrusion portion 220 of the lower stacked battery pack 1 and the lower receiving portion 230 of the upper stacked battery pack 1 are engaged with each other via the latch 500. As a result, the upper stacked battery pack 1 and the lower stacked battery pack 1 are prevented from detaching from each other. For each set of the upper protrusion portion 220 of the lower stacked battery pack 1 and the lower receiving portion 230 of the upper stacked battery pack 1, a single latch 500 may be provided, or two latches 500 may be provided as illustrated in the present invention. Depending on the circumstances, for the battery pack 1 in a larger size, three or more latches 500 may be provided.

Hereinafter, the more detailed structure of the latch 500 and the detailed structure of a first latch engagement portion 230a and a second latch engagement portion 220a with which the latch 500 is engaged will be described with reference to FIGS. 9 to 14.

The first latch engagement portion 230a is provided in the lower portion of the pack case 200, and the second latch engagement portion 220a is provided in the upper portion of the pack case 200.

First, it is to be noted that in an embodiment of the present invention, descriptions will be made on an example where the first latch engagement portion 230a is provided in the lower receiving portion 230, and the second latch engagement portion 220a is provided in the upper protrusion portion 220. However, the present invention is not limited to the example illustrated, and any other structures may be applied as long as the first latch engagement portion 230a of the pack case 200 of the upper stacked battery pack 1 and the second latch engagement portion 220a of the pack case 200 of the lower stacked battery pack 1 may communicate with and be coupled to each other while receiving the latch 500. For example, although not illustrated in the present invention, various modifications or changes may be made, such as a structure in which the first latch engagement portion 230a is provided at the upper end of the pack case 200, and the second latch engagement portion 220a is provided at the lower end of the pack case 200.

In other words, the first latch engagement portion 230a is provided in the lower portion of the pack case 200, and the second latch engagement portion 220a is provided in the upper portion of the pack case 200, with the first latch engagement portion 230a and the second latch engagement portion 220a being positioned on the same line in the vertical direction of the pack case 200, forming a structure in which the first latch engagement portion 230a and the second latch engagement portion 220a communicate with each other between the vertically stacked battery packs 1.

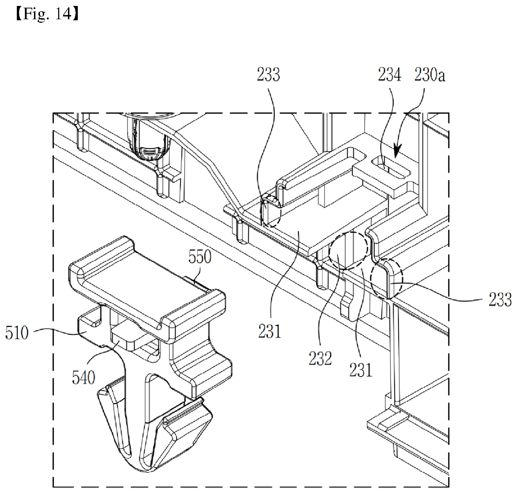

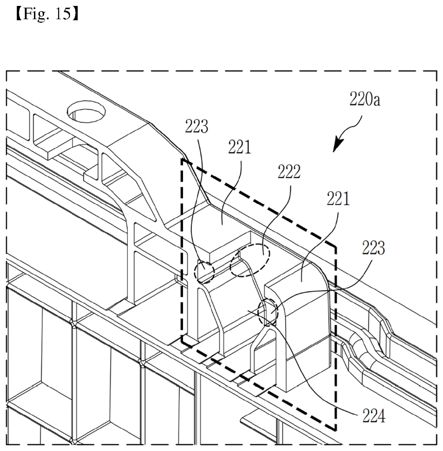

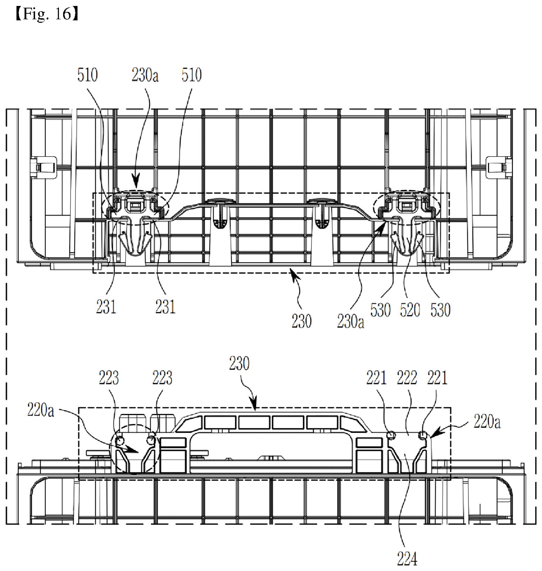

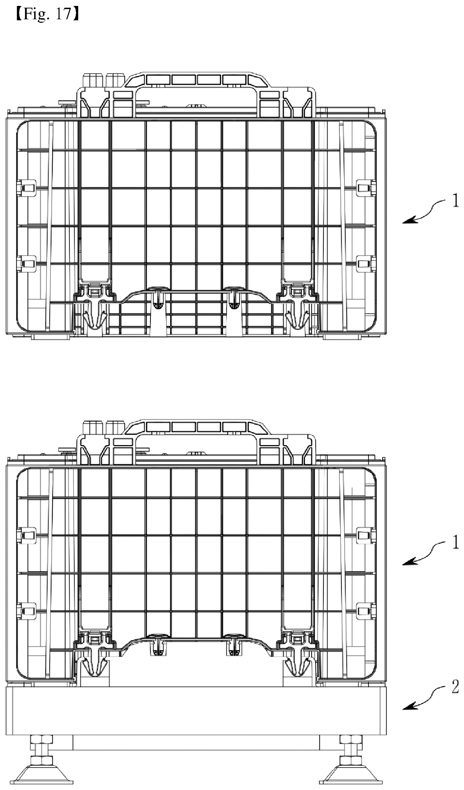

FIG. 13 is an enlarged view of the latch 500 of FIG. 8. FIG. 14 is an enlarged view of the latch 500 and the first latch engagement portion 230a of the lower receiving portion 230 indicated by a dashed line in FIG. 8. FIG. 15 is an enlarged view of the second latch engagement portion 220a of the upper protrusion portion 220. FIG. 16 is a side view taken when the perspective view of FIG. 11 is viewed from a different angle. FIG. 17 is a reference view illustrating a state where the vertically stacked battery packs 1 are coupled to each other.

FIG. 13 (a) is a front perspective view of the latch 500, and FIG. 13 (b) is a rear perspective view of the latch 500.

Also, referring to FIGS. 9, 10, and 14 to 16, the upper protrusion portion 220 includes the second latch engagement portion 220a that receives the lower portion 500b of the latch 500, and the lower receiving portion 230 includes the first latch engagement portion 230a that receives the upper portion 500a of the latch 500.

Referring to FIG. 13, the latch 500 is divided largely into two parts. The upper portion 500a of the latch 500 is coupled to the lower receiving portion 230 of the upper stacked battery pack 1, and the lower portion 500b of the latch 500 is coupled to the upper protrusion portion 220 of the lower stacked battery pack 1.

The upper portion 500a of the latch 500 includes a pair of protrusions 510 protruding horizontally from both sides thereof. The lower portion 500b of the latch 500 includes a center support 520 extending downward from between the pair of protrusions 510 in the vertical direction, and a pair of wings 530 extending in directions of both sides from the lower end of the center support 520. The lower end of the center support 520 and the lower end of each of the pair of wings 530 are connected to each other, and at the portion other than the connected portion, the lower end of the center support 520 and each of the pair of wings 530 are spaced apart from each other. Thus, while the lower end of each of the pair of wings 530 is fixed to the lower end of the center support 520, the remaining portion of each of the pair of wings 530 other than the fixed lower end may be displaced within the distance of the spacing.

First, descriptions will be made on the engagement between the upper portion 500a of the latch 500 and the first latch engagement portion 230a of the lower receiving portion 230 of the pack case 200.

Referring to FIGS.13 to 16, when the upper portion 500a of the latch 500 is engaged with the first latch engagement portion 230a of the lower receiving portion 230 of the pack case 200, the bottom surfaces of the pair of protrusions 510 of the upper portion 500a of the latch 500 are supported by support portions 231 of the lower receiving portion 230 illustrated in FIGS. 14 and 16. The support portions 231 of the lower receiving portion 230 have the shape of plates disposed under the bottom surfaces of the pair of protrusions 510 of the upper portion 500a of the latch 500. The support portions 231 of the lower receiving portion 230 restrict the positional movement of the bottom surfaces of the pair of protrusions 510 of the latch 500. The support portions 231 of the lower receiving portion 230 are respectively provided at both sides of the lower receiving portion 230 to correspond to the bottom surfaces of the pair of protrusions 510 of the latch 500. The upper portion 500a of the latch 500 may further include rigidity reinforcement portions 511 above the pair of protrusions 510, in order to reinforce the rigidity. The latch 500 of the present invention is not limited to that illustrated in FIG. 13, and may be implemented without including the rigidity reinforcement portions 511.

A through groove 232 is provided between the pair of support portions 231 such that the center support 520 of the lower portion 500b of the latch 500 passes through the through groove 232. The through groove 232 has a notch shape having a groove recessed in the horizontal direction, in order to horizontally remove the latch 500 engaged with the lower receiving portion 230.

The width of the through groove 232 is equal to or larger than the width of the center support 520 of the lower portion 500b of the latch 500, which will be described herein later, but less than the combined width of the wings 530 at both sides of the lower portion 500b of the latch 500. Thus, even when the latch 500 is subjected to an upwardly pulling load, the latch 500 is prevented from being pulled upwardly through the through groove 232.

A pair of receiving recesses 233 is provided at both ends of the support portions 231 of the lower receiving portion 230, such that the ends of the pair of protrusions 510 of the latch 500 are fitted into and received in the pair of receiving recesses 233, respectively.

Thus, the support portions 231 of the first latch engagement portion 230a of the lower receiving portion 230 restrict the positional movement of the pair of protrusions 510 of the latch 500 in the vertical direction. Further, the pair of receiving recesses 233 of the first latch engagement portion 230a of the lower receiving portion 230 restrict the positional movement of the pair of protrusions 510 of the latch 500 in the vertical direction and the lateral direction (the lateral direction along the surface of the pack case 200). Therefore, even when external forces such as unintended impacts are applied from the outside, the vertically stacked battery packs 1 are prevented from being detaching from each other.

The method of engaging the upper portion 500a of the latch 500 with the first latch engagement portion 230a of the lower receiving portion 230 will be described. First, the upper portion 500a of the latch 500 illustrated in FIG. 14 is aligned with and pushed into the first latch engagement portion 230a of the lower receiving portion 230 in the horizontal direction (toward the inside of the pack case 200). At this time, a hook 550 provided on the rear surface of the upper portion 500a of the latch 500 (see FIG. 13 (b)) is hooked into a hook groove 234 provided in the first latch engagement portion 230a of the lower receiving portion 230 to complete the engagement (hook coupling) of the latch 500 with the first latch engagement portion 230a of the lower receiving portion 230.

Meanwhile, referring to FIGS. 11, 16, and 17, when the upper portion 500a of the latch 500 is engaged with the first latch engagement portion 230a of the lower receiving portion 230 of the pack case 200, the lower portion 500b of the latch 500 protrudes downwardly through the through groove 232. When the battery pack 1 of FIGS. 11, 16, and 17 is stacked on another battery pack 1 disposed below the battery pack 1 of FIGS. 11, 16, and 17, the lower portion 500b of the latch 500 is engaged with the upper protrusion portion 220 of the lower stacked battery pack 1 (more specifically, the second latch engagement portion 220a of the upper protrusion portion 220) as illustrated in FIG. 12.

In this regard, descriptions will be made on the engagement between the lower portion 500b of the latch 500 and the second latch engagement portion 220a of the upper protrusion portion 220 of the pack case 200.

Referring to FIGS. 13, 15, and 16, the second latch engagement portion 220a of the upper protrusion portion 220 of the pack case 200 is opened at the upper surface thereof. The lower portion 500b of the latch 500 is inserted through an opening 222 in the upper surface of the second latch engagement portion 220a of the upper protrusion portion 220. Then, the lower portion 500b of the latch 500 is mounted in a mounting portion 224 of the second latch engagement portion 220a.

When the upper protrusion portion 220 of the lower stacked battery pack 1 is received in the lower receiving portion 230 of the upper stacked battery pack 1, the through groove 232 of the first latch engagement portion 230a of the lower receiving portion 230 of the upper stacked battery pack 1 communicates with the opening 222 in the upper surface of the second latch engagement portion 220a of the upper protrusion portion 220 of the lower stacked battery pack 1.

Thus, based on the through groove 232 of the first latch engagement portion 230a of the lower receiving portion 230 of the upper stacked battery pack 1 and the opening 222 in the upper surface of the second latch engagement portion 220a of the upper protrusion portion 220 of the lower stacked battery pack 1, the upper portion 500a of the latch 500 secures the upper stacked battery pack 1, and the lower portion 500b of the latch 500 secures the lower stacked battery pack 1 (see FIG. 12).

Meanwhile, a pair of catching portions 221 is provided at both sides of the opening 222 of the upper surface of the second latch engagement portion 220a. Each of the pair of catching portions 221 has the shape protruding toward the opening 222 side. When the upper stacked battery pack 1 is coupled to the lower stacked battery pack 1 by the latch 500 as described above, the upper ends of the pair of wings 530 provided in the lower portion 500b of the latch 500 are caught in the pair of catching portions 221 on the upper surface of the second latch engagement portion 220a of the upper protrusion portion 220, respectively. Further, a pair of receiving recesses 223 is provided under the pair of catching portions 221, respectively, such that the ends of the pair of wings 530 of the lower portion 500b of the latch 500 are received and engaged in the pair of receiving recesses 223.

Therefore, the pair of catching portions 221 of the second latch engagement portion 220a of the upper protrusion portion 220 restrict the positional movement of the pair of wings 530 of the lower portion 500b of the latch 500 in the vertical direction. Further, the pair of receiving recesses 223 of the second latch engagement portion 220a of the upper protrusion portion 220 engage with the ends of the pair of wings 530 of the lower portion 500b of the latch 500, which restricts the positional movement of the pair of wings 530 of the latch 500 in the vertical direction and the lateral direction (the lateral direction along the surface of the pack case 200). As a result, even when external forces such as unintended impacts are applied from the outside, the vertically stacked battery packs 1 are prevented from being detached from each other.

A part of the center support 520 and the pair of wings 530 in the lower portion 500b of the latch 500 are mounted in the void space of the mounting portion 224 of the second latch engagement portion 220a of the upper protrusion portion 220. The mounting portion 224 communicates with the opening 222, and the pair of catching portions 221 are disposed at both sides of the upper portion of the mounting portion 224. The structure and shape of the mounting portion 224 of the second latch engagement portion 220a of the upper protrusion portion 220 are not limited to those illustrated in the present invention, and the mounting portion 224 may have any other structures and shapes as long as the lower portion 500b of the latch 500 may be mounted (received) in the void space of the mounting portion 224 without being disengaged.

In other words, as illustrated in FIG. 16, the width of the mounting portion 224 of the second latch engagement portion 220a may taper downward to substantially conform to the external contour of the lower portion 500b of the latch 500 including the pair of wings 530. However, depending on the circumstances, the mounting portion 224 may be implemented to have a constant width downward, or various other shapes.

For reference, if the mounting portion 224 tapers downward, it is sufficient provided that its width does not become narrower than the width of the lower portion 500b of the latch 500 including the wings 530 at both sides, which otherwise results the lower portion 500b of the latch 500 itself being inadvertently disengaged through the opening 222 in the upper surface of the second latch engagement portion 220a.

The width of the opening 222 in the upper surface of the second latch engagement portion 220a of the upper protrusion portion 220 is narrower than the normal width of the lower portion 500b of the latch 500 including the wings 530 at both sides.

As described above, the wings 530 at both sides of the lower portion 500b of the latch 500 are spaced apart from the center support 520, but each of the wings 530 at both sides may move (be displaced) toward the center support 520 when being applied a force. When the wings 530 at both sides of the lower portion 500b of the latch 500 move toward the center support 520 upon receiving a force, the width of the lower portion 500b of the latch 500 decreases. The width of the opening 222 in the upper surface of the second latch engagement portion 220a of the upper protrusion portion 220 is equal to or larger than the width of the lower portion 500b of the latch 500 at this time.

The movement (displacement) of the wings 530 at both sides of the latch 500 will be described in more detail. As illustrated in FIG. 16, when a battery pack 1 (including the latch 500) is stacked above another battery pack 1 to be stacked underneath, when the wings 530 at both sides of the latch 500 already engaged with the upper stacked battery pack 1 are inserted into the opening 222 of the second latch engagement portion 220a of the upper protrusion portion 220 of the lower stacked battery pack 1, the wings 530 of the latch 500 slide into the opening 222 between the catching portions 221 at both sides along their slope surfaces. The wings 530 of the latch 500 are sloped to taper downward relative to the vertical direction (relative to the extending direction of the center support 520).

At this time, the unfixed upper ends of the wings 530 at both sides of the latch 500 move (be displaced) toward the center support 520 by receiving a force toward the center due to the protruding catching portions 221 of the second latch engagement portion 220a of the upper protrusion portion 220 of the lower stacked battery pack 1. As a result, the width of the lower portion 500b of the latch 500 becomes narrower than that in the case illustrated in FIGS. 13 and 16, and accordingly, the lower portion 500b of the latch 500 is easily inserted into the opening 222 of the second latch engagement portion 220a of the upper protrusion portion 220.

Meanwhile, when the lower portion 500b of the latch 500 is mounted in the mounting portion 224 of the second latch engagement portion 220a of the upper protrusion portion 220, that is, when the wings 530 of the latch 500 pass entirely through the opening 222 of the second latch engagement portion 220a of the upper protrusion portion 220, the wings 530 are restored to their original states by resilience, so that the width of the lower portions 500b of the latch 500 becomes larger again than the width of the opening 222, and as described above, the upper ends of the wings 530 are caught and engaged in the catching portions 221 of the second latch engagement portion 220a of the upper protrusion portion 220.

Meanwhile, the outer surface of the pack case 200 may further include a reinforcement portion 240 formed in a lattice-like protrusion shape to reinforce the rigidity of the outer surface of the pack case 200.

Hereinafter, a method of removing (separating) the latch 500 engaged with the vertically stacked battery packs 1 will be described. The latch 500 may be removed in the outward direction (horizontal direction) of the battery packs 1.

First, a removal grip portion 540 (referring to FIG. 13 (a)) is provided on the front surface of the upper portion 500a of the latch 500and has a shape protruding from the front surface (see FIG. 13 (a)). By holding the removal grip portion 540 and tilting it slightly, the hook 550 provided on the rear surface of the upper portion 500a of the latch 500 is separated from the hook groove 234 provided in the first latch engagement portion 230a of the lower receiving portion 230. Then, while holding the removal grip portion 540, the latch 500 is pulled in the horizontal direction (in the outward direction of the pack case 200). At this time, the latch 500 engaged with the first latch engagement portion 230a of the lower receiving portion 230 of the upper stacked battery pack 1 and the second latch engagement portion 220a of the upper protrusion portion 220 of the lower stacked battery pack 1 is easily removed (separated).

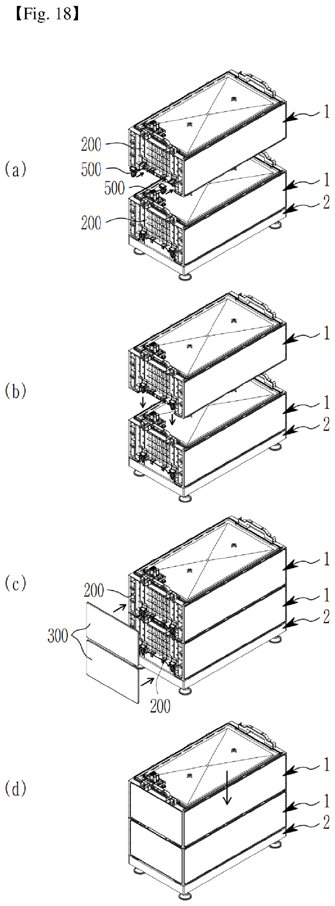

FIG 18 is a reference view illustrating a process of engaging the latch 500 with the battery packs 1 stacked in the modular form according to each embodiment described above.

First, the latch 500 is engaged with the upper stacked battery pack 1 (see FIG. 18 (a)). Then, the upper stacked battery pack 1 is stacked on the lower stacked battery pack 1, and at this time, the latch 500 engaged with the upper stacked battery pack 1 is also engaged with the lower stacked battery pack 1 (see FIG. 18 (b)). Then, the external cover 300 is coupled to the outer surface of the pack case 200 of each of the upper stacked battery pack 1 and the lower stacked battery pack 1 (see FIG. 18 (c)). FIG. 18 (d) illustrates the state where the coupling of the latch 500 and the external cover 300 is completed. The other detailed descriptions overlap with and refer to those described above in FIGS. 1 to 17.

Meanwhile, although not illustrated in FIG. 18, the latch 500 and the external cover 300 are also coupled to the surface (right surface) facing the surface (left surface) to which the latch 500 is coupled as illustrated in (a) to (d) of FIG. 18, in the same manner as described above referring to FIGS. 18A to 18D. Depending on the circumstances, the method described above may also be applied to either one or both of the front and rear surfaces of the battery packs 1.

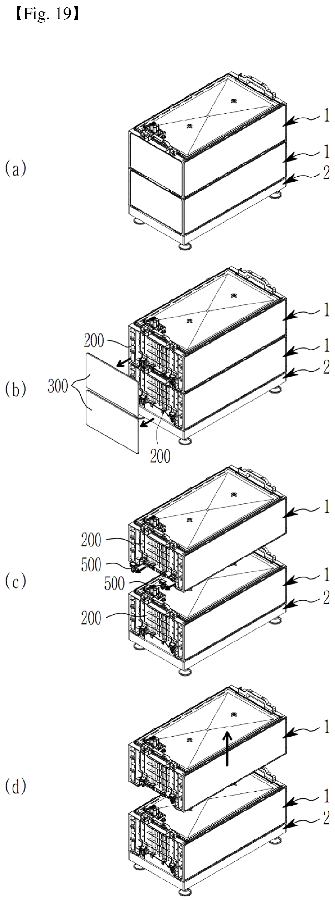

FIG. 19 is a reference view illustrating a process of removing the latch 500 from the battery packs 1 stacked in the module form according to each embodiment described above.

First, FIG. 19 (a) illustrates the vertically stacked battery packs 1, which are the same as illustrated in FIG. 18(d). Then, the external cover 300 is separated from the outer surface of the pack case 200 of each of the upper stacked battery pack 1 and the lower stacked battery pack 1 (see FIG. 19 (b)). Then, the latch 500 connecting the upper stacked battery pack 1 and the lower stacked battery pack 1 is pulled and removed (see FIG. 19 (c)). Then, the upper stacked battery pack 1 is lifted (see FIG. 19(d)). The other detailed descriptions overlap with and refer to those described above in FIGS. 1 to 17.

Meanwhile, although not illustrated in FIG. 19, the latch 500 and the external cover 300 are also separated from the surface (right surface) facing the surface (left surface) to which the latch 500 is coupled as illustrated in FIG. 19, in the same manner as described above referring to FIG. 19. Depending on the circumstances, the method described above may also be applied to either one or both of the front and rear surfaces of the battery packs 1.

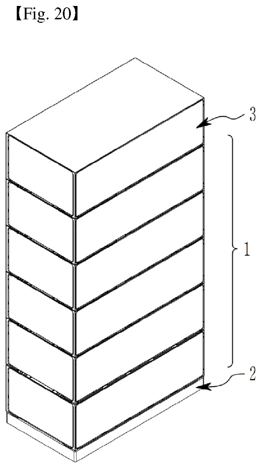

FIG. 20 is a reference view schematically illustrating a case where the plurality of modular battery packs 1 according to the embodiments of the present invention are stacked, and a battery protection unit (BPU) 3 is coupled to the top of the stacked battery packs 1.

The battery pack according to the embodiments of the present invention described above may be implemented as an energy storage system (ESS) as described above, may be implemented as a battery rack, or may be applied to various other devices. These devices may include, but are not limited to, transportation vehicles such as electric bicycles, electric vehicles, and hybrid vehicles, and/or energy storage devices for homes, and the present invention may be applied to various devices that may use battery modules and battery packs including battery modules, which also fall within the scope of the present invention.

While the embodiments of the present invention have been described, the scope of the present invention is not limited thereto. Various modifications and changes made by those skilled in the art based on the technical idea of the present invention defined in the following claims also fall within the scope of the present invention.

### [Description of Reference Numerals]

1: battery pack
2: base part
3: BPU
100: cell module assembly
110: battery cell
120: end plate
130: strap
140: busbar housing assembly
200: pack case
200-1: upper case
200-2: lower case
210: external cover coupling portion
220: upper protrusion portion
220a: second latch engagement portion
221: catching portion
222: opening
223: receiving recess
224: mounting portion
230: lower receiving portion
230a: first latch engagement portion
231: support portion
232: through groove
233: receiving recess
234: hook groove
240: reinforcement portion
300: external cover
400: electronics unit
500: latch
510: protrusion
520: center support
530: wing
540: removal grip portion
550: hook

## Claims

1. A battery pack comprising:
a cell module assembly including a battery cell stack in which a plurality of battery cells is stacked;
a pack case accommodating the cell module assembly; and
a latch capable of being removably mounted in the pack case, and capable of coupling adjacent battery packs.

2. The battery pack according to claim 1, wherein an upper portion of the latch includes a pair of protrusions protruding toward both sides, and
a lower portion of the latch includes a center support extending downward in a vertical direction from between the pair of protrusions, and a pair of wings extending toward both sides from a lower end of the center support.

3. The battery pack according to claim 2, wherein the latch further includes a removal grip portion formed on a front area of the latch to project from the front area, and
the latch is removable from an outer surface in a horizontal direction toward an outside of the pack case.

4. The battery pack according to claim 2, wherein the pack case includes a first latch engagement portion with which an upper portion of the latch is capable of being engaged,
the first latch engagement portion includes
a pair of support portions supporting the pair of projections of the upper portion of the latch, and
a through groove provided between the pair of support portions, through which the center support of the latch penetrates,
wherein the pair of support portions support at least bottom surfaces of the pair of protrusions of the latch to restrict a positional movement of the latch in the vertical direction.

5. The battery pack according to claim 4, wherein the pair of support portions of the first latch engagement portion have a shape of plates disposed under the bottom surfaces of the pair of protrusions.

6. The battery pack according to claim 4, wherein the through groove of the first latch engagement portion has a notch shape.

7. The battery pack according to claim 4, wherein the first latch engagement portion further includes
a pair of receiving recesses provided at both ends of the pair of support portions, and
ends of the pair of protrusions of the upper portion of the latch are respectively fitted into and received in the pair of receiving recesses.

8. The battery pack according to claim 4, wherein the upper portion of the latch further includes a hook provided on a rear area of the upper portion of the latch to protrude from the rear area,
the first latch engagement portion further includes a hook groove provided between the pair of support portions and around the through groove, and
the hook of the upper portion of the latch is capable of being hooked and coupled into the hook groove of the first latch engagement portion.

9. The battery pack according to claim 2, wherein the pack case includes a second latch engagement portion with which a lower portion of the latch is capable of being engaged,
the second latch engagement portion includes:
an opening formed by opening in an upper surface of the second latch engagement portion, through which the lower portion of the latch passes;
a mounting portion communicating with the opening; and
a pair of catching portions disposed on both sides of the opening, and having a shape protruding toward the opening.

10. The battery pack according to claim 9, wherein lower ends of the pair of wings of the lower portion of the latch are fixed to the center support, remaining portions of the pair of wings are displaceable within a distance spaced apart from the center support,
when the lower portion of the latch penetrates downwardly through the opening of the second latch engagement portion, a force is applied to the pair of wings of the latch by the pair of catching portions, and the remaining portions of the pair of wings move toward the central support, and
when the pair of wings of the latch pass through the opening and are mounted in the mounting portion, the pair of wings are restored to their original states by resilience, and caught in the pair of catching portions of the second latch engagement portion.

11. The battery pack according to claim 9, wherein each of the pair of wings of the lower portion of the latch has a slope surface tapering downward relative to an extending direction of the center support, and
the pair of wings slide into the opening between the pair of catching portions of the second latch engagement portion along the slope surface, to be inserted into the mounting portion.

12. The battery pack according to claim 11, wherein the mounting portion of the second latch engagement portion has a shape tapering downward to conform to an external contour of the pair of wings of the lower portion of the latch.

13. The battery pack according to claim 9, wherein before or after the latch is mounted in the second latch engagement portion, an entire width of the lower portion of the latch including the pair of wings is larger than a width of the opening of the second latch engagement portion.

14. The battery pack according to claim 2, wherein the pack case includes a first latch engagement portion with which an upper portion of the latch is capable of being engaged, and a second latch engagement portion with which a lower portion of the latch is capable of being engaged,
the first latch engagement portion is disposed in a lower portion of the pack case, and the second latch engagement portion is disposed in an upper portion of the pack case, the first latch engagement portion and the second latch engagement portion being positioned on the same line in a vertical direction of the pack case, and
the upper portion of the latch is engaged with the first latch engagement portion of an upper stacked battery pack, and the lower portion of the latch is engaged with the second latch engagement portion of a lower stacked battery pack, to enable vertically stacked battery packs to be coupled and fixed.

15. The battery pack according to claim 14, wherein the pack case includes an upper protrusion portion in an upper portion, and a lower receiving portion in a lower portion,
the upper protrusion portion of the lower stacked battery pack is fitted and coupled into the lower receiving portion of the upper stacked battery pack, and
the first latch engagement portion is provided in the lower receiving portion, and the second latch engagement portion is provided in the upper protrusion portion.

16. The battery pack according to claim 15, wherein the upper protrusion portion of the pack case is a handle for carrying the battery pack.

17. The battery pack according to claim 1, wherein the pack case includes a plastic with high heat resistance and rigidity.

18. An energy storage system comprising: the battery pack according to claim 1.
